# EUROPÄISCHE PATENTSCHRIFT

(11) **EP 3 129 662 B1**
(45) Veröffentlichungstag und Bekanntmachung des Hinweises auf die Patenterteilung: **04.09.2019**
(21) Anmeldenummer: 15711677.3
(22) Anmeldetag: 11.03.2015
(51) Int. Cl.: F16B 21/07, F16B 5/06, F16B 5/01, F16B 2/20, F16B 43/00, F16B 43/02

(54) **KUNSTSTOFFBAUTEIL MIT EINEM VERBINDUNGSELEMENT**
PLASTIC COMPONENT COMPRISING A CONNECTING ELEMENT
PIÈCE EN MATIÈRE PLASTIQUE MUNIE D'UN ÉLÉMENT D'ASSEMBLAGE

(30) Priorität: 07.04.2014 DE 102014206640
(43) Veröffentlichungstag der Anmeldung: 15.02.2017
(73) Patentinhaber: Bayerische Motoren Werke Aktiengesellschaft, 80809 München (DE)
(72) Erfinder: GREIL, Juergen, 82237 Woerthsee (DE); HAMMER, Maik, 84079 Bruckberg (DE); KRUKOWSKI, Katrin, 81677 München (DE); LEICHTL, Lars, 95686 Fichtelberg (DE); NIEKERK, Johann van, 80937 München (DE)
(86) Internationale Anmeldenummer: PCT/EP2015/055000
(87) Internationale Veröffentlichungsnummer: WO 2015/154930

(56) Entgegenhaltungen:
- FR-A1- 2 891 325
- US-A- 4 307 864
- US-A1- 2008 213 034

## Beschreibung

Die Erfindung betrifft ein faserverstärktes Kunststoffbauteil mit einem Verbindungselement, wobei das Verbindungselement einen Anbindungsabschnitt aufweist, der zumindest teilweise aus dem Kunststoffbauteil herausragt.

Zur Reduzierung der Emissionen und zur Verringerung des Verbrauchs, werden im heutigen Fahrzeugbau Anstrengungen unternommen mit dem Ziel, das Gesamtgewicht des Fahrzeugs zu reduzieren. Ein Ansatz ist hierbei die Verwendung neuer Materialien, wie bspw. faserverstärkter Kunststoffe, zur Herstellung von Strukturbauteilen oder Außenhautbauteilen, die bislang überwiegend aus metallischen Materialien, wie Blech gefertigt wurden. Dabei hat sich zwischenzeitlich die Verwendung von kohlenstofffaserverstärkten Bauteilen oder glasfaserverstärkten Bauteilen etabliert.

Bei der Herstellung von Baugruppen oder Unterbaugruppen, in denen Bauteile aus faserverstärktem Kunststoff und Bauteile aus metallischem Werkstoff kombiniert werden, ergeben sich Problemstellungen, die das Fügen dieser Bauteile betreffen. Bekannte stoffschlüssige Verfahren, wie bspw. das Schweißen sind bei diesen Materialkombinationen nicht anwendbar.

Aus der DE 10 2012 022 959 A1 ist eine Befestigungsvorrichtung für einen Tank eines Kraftfahrzeuges bekannt, umfassend eine annähernd winkelförmige Konsole zur Aufnahme des Tanks, wobei die Konsole aus einem Faserverbundkunststoff besteht.

Aus der US 2008/0213034 A1 ist eine Befestigungseinrichtung mit Kugelkopf bekannt, die über eine Basisstation mit einem Strukturbauteil verbindbar ist.

Die US 4,307,864 zeigt ein Campingzubehörset mit verschiedenen Zubehörteilen, die über ein Kugelgelenk mit einem Aufhängeclip verbindbar sind.

Aus der FR 2 891 325 ist ein Leichtbaupaneel, beispielsweise in Form einer Sandwichstruktur, bekannt, und ein dafür geeignetes Befestigungselement.

Ausgehend von diesem Stand der Technik, macht es sich die Erfindung zur Aufgabe, ein Kunststoffbauteil anzugeben, mit dem die Nachteile des Standes der Technik überwunden werden. Es ist eine spezielle Aufgabe der Erfindung, ein Kunststoffbauteil anzugeben, das auf besonders einfache Weise mit anderen Bauteilen, die aus anderen Materialien ausgebildet sind, verbunden werden kann zu einer Baugruppe.

Diese Aufgabe wird durch ein faserverstärktes Kunststoffbauteil gemäß dem Anspruch 1 gelöst. Die abhängigen Ansprüche stellen vorteilhafte Ausführungsformen der vorliegenden Erfindung dar.

Zur Lösung dieser Aufgabe schlägt die Erfindung ein faserverstärktes Kunststoffbauteil mit einem Verbindungselement vor, wobei das Verbindungselement einen Anbindungsabschnitt, der zumindest teilweise aus dem Kunststoffbauteil herausragt und einen Verankerungsabschnitt, mit dem das Verbindungselement lösbar mit dem Kunststoffbauteil verbunden ist, aufweist. Der Verankerungsabschnitt weist dabei einen kleineren Querschnittsumfang als der Anbindungsabschnitt auf. Folglich ist die Querschnittsfläche bzw. der Querschnitt an sich im Verankerungsabschnitt kleiner als im Anbindungsabschnitt. Dadurch kann das Verbindungselement in einem Durchbruch eines Kunststoffbauteils mit seinem Verankerungsabschnitt eingebracht werden.

Verstärkungsfasern im Sinne dieser Erfindung können organische oder anorganische Verstärkungsfasern sein. Die Verstärkungsfasern können beispielsweise als Kohlenstofffasern ausgebildet sein. Diese bilden mit der Kunststoffmatrix einen kohlenstofffaserverstärkten Kunststoff, auch CFK (carbonfaserverstärkter Kunststoff) genannt. Das zugehörige faserverstärkte Kunststoffbauteil ist dann ein CFK-Bauteil. Die Verstärkungsfasern können beispielsweise auch als Glasfasern ausgebildet sein. Diese bilden dann mit der Kunststoffmatrix einen glasfaserverstärkten Kunststoff, auch GFK genannt. Die Erfindung soll jedoch nicht darauf beschränkt sein, denn es können auch Verstärkungsfasern bspw. aus Aramid-, Polyester-, Nylon-, Polyethylen-, DMNA-, Basalt-, Bor-, Keramik-, Stahl-, Naturfasern und/oder aus einer Kombination dieser Fasern verwendet werden. Diese Fasern sind dann in einer Kunststoffmatrix eingebettet.

Das Material der Kunststoffmatrix mag insbesondere ein oder mehrere thermoplastische Kunststoffe (Thermoplaste) und/oder duroplastische Kunststoffe (Duroplaste) aufweisen. Faserverstärkte Kunststoffe mit einer thermoplastischen Matrix weisen den Vorteil auf, dass sie sich nachträglich umformen oder an andere Thermoplaste anschweißen lassen. Als thermoplastische Kunststoffe eignen sich bspw. Polyetherketon (PEEK), Polyphenylensulfid (PPS), Polysulfon (PSU), Polyetherimid (PEI) und/oder Polytetrafluorethylen (PTFE). Faserverstärkte Kunststoffe mit einer duroplastischen Matrix lassen sich nach dem Aushärten bzw. dem Vernetzen der Matrix nicht mehr umformen. Sie weisen vorteilhafterweise einen hohen Temperatureinsatzbereich auf. Dies gilt besonders für heißhärtende Systeme, die unter hohen Temperaturen ausgehärtet werden. Faserverstärkte Kunststoffe mit duroplastischer Matrix weisen meist die höchsten Festigkeiten auf. Als duroplastische Kunststoffe bzw. Matrix können z.B. folgende Harze zur Anwendung kommen: Epoxidharze (EP), ungesättigtes Polyesterharz (UP), Vinylesterharz (VE), Phenol-Formaldehydharz (PF), Diallylphtalatharz (DAP), Methacrylatharz (MMA), Polyurethan (PUR), Aminoharze, Melaminharze (MF/MP) und/oder Harnstoffharz (UF).

Weiterhin kann der Anbindungsabschnitt zumindest teilweise kugelförmig ausgebildet sein. Die kugelförmige Ausbildung bietet den Vorteil, dass ein mit dem Kunststoffbauteil zu verbindendes zweites Bauteil mit einer zur Kugelform korrespondierenden schalenförmigen Lagerung auf die Kugel aufgesetzt werden kann, wodurch sowohl ein Verdrehen wie auch ein Kippen des Bauteils um den kugelförmigen Anbindungsabschnitt möglich ist. Dies bietet den Vorteil, dass ein Drehmoment und Kräftefreilagerung des zweiten Bauteils auf dem kugelförmigen Anbindungsabschnitt möglich ist, so dass keine oder nur in geringem Maß Kräfte und Drehmomente in den Verankerungsabschnitt übertragen werden, während dem Verbinden des Kunststoffbauteils mit dem zweiten Bauteil.

Weiterhin umfasst der Verankerungsabschnitt einen Schaft und eine Spanneinrichtung. Dadurch kann das Verbindungselement auf besonders einfache Weise in einen Durchbruch des Kunststoffbauteils eingebracht werden, wobei der Schaft durch den Durchbruch hindurch ragt und auf einer gegenüberliegenden Seite des Kunststoffbauteils mit Hilfe der Spanneinrichtung an dem Kunststoffbauteil arretiert werden kann.

Gemäß der Erfindung ist die Spanneinrichtung in Form eines Spanners ausgebildet. Spanner im Sinne der Erfindung sind auf Basis eines Exzenters funktionierende Hebel, deren Exzentrizität aus einer geöffneten Stellung, in der das Verbindungselement spannungsfrei ist, in eine geschlossene Stellung, in der das Verbindungselement verspannt ist und umgekehrt überführbar ist. Der Spanner kann als Schnellspanner ausgebildet sein, so dass auf einfache Weise das Verbindungselement in das Kunststoffbauteil eingeführt und mit diesem ortsfest verbunden werden kann.

In einer Ausführungsform, die nicht im Schutzbereich der Patentansprüche liegt, kann die Spanneinrichtung auch als Schraubverschluss ausgebildet sein. In dieser Ausführungsform weist der Schaft an seinem dem Anbindungsabschnitt gegenüberliegenden axialen Ende ein Gewinde auf, auf das eine Schraubenmutter aufgeschraubt werden kann, um das Verbindungselement an dem Kunststoffbauteil zu befestigen.

In beiden Ausführungsformen kann der Anbindungsabschnitt auf einer ersten Seite des Kunststoffbauteils aus dem Kunststoffbauteil heraus ragen und der Verankerungsabschnitt zumindest teilweise auf einer zweiten Seite des Kunststoffbauteils heraus ragen, wobei die erste und die zweite Seite des Kunststoffbauteils einander gegenüber liegen.

Weiterhin ist das Kunststoffbauteil ein faserverstärktes Kunststoffbauteil, wobei Verstärkungsfasern in einer Matrix angeordnet sind.

Gemäß einer bevorzugten Ausführungsform ist das Kunststoffbauteil als ein Sandwich-Bauteil ausgebildet mit einem Kern und mindestens einer Verstärkungslage. Die Verstärkungslage kann einseitig auf den Kern oder auch beidseitig auf den Kern aufgebracht sein. Alternativ dazu kann der Kern mit der Verstärkungslage auch umwickelt oder umflochten sein. Die Verstärkungslage ist dann als eine Decklage oder Deckschicht ausgebildet. Das Sandwich-Bauteil hat den Vorteil, dass die Verstärkungslagen randseitig angeordnet sind, und somit dem Sandwich-Bauteil hohe mechanische Eigenschaften verleihen, wobei im Inneren ein vergleichsweise kostengünstiger und leichter Kern eingebracht ist.

Weiterhin kann ein Durchbruch vorgesehen sein, der durch das Kunststoffbauteil von dessen ersten Seite zu dessen zweiten Seite verläuft und in dem zumindest der Verankerungsabschnitt des Verbindungselements einbringbar ist.

Weiterhin kann in dem Durchbruch ein druckkraftresistentes Insert vorgesehen sein, mit dem eine Vorspannkraft zwischen dem Anbindungsabschnitt des Verbindungselements und der Spanneinrichtung übertragbar ist. Dadurch kann bei der Montage des Verbindungselementes an dem Kunststoffbauteil vermieden werden, dass das Kunststoffbauteil mit Druckkräften aufgrund von Vorspannkräften beaufschlagt wird. Stattdessen wirkt die Vorspannkraft über das Insertund einem Teil des Kunststoffbauteils auf die Spanneinrichtung. Das Insertkann als Buchse, Randbuchse oder Doppelrandbuchse ausgebildet sein.

Gemäß einer besonders bevorzugten Ausführungsform der Erfindung umfasst das Sandwich-Bauteil einen Kern, der mit einer ersten Deckschicht, welche die erste Seite des Kunststoffbauteils ausbildet und mit einer zweiten Deckschicht, welche die zweite Seite des Kunststoffbauteils ausbildet, versehen ist. Der Durchbruch ist dabei als kreisrunde Bohrung ausgebildet, die im Bereich der ersten Deckschicht und des Kernes einen ersten Durchmesser aufweist und im Bereich der zweiten Deckschicht einen zweiten Durchmesser aufweist, der kleiner ist als der erste Durchmesser. Dadurch bildet sich im Durchbruch beim Übergang von dem großen Durchmesser zu dem kleinen Durchmesser in axialer Richtung eine Stufe beziehungsweise ein Kragen, der in Umfangsrichtung ausgebildet ist. Das Insert wird im Bereich des größeren Durchmessers in den Durchbruch eingeführt, bis es auf dem umlaufenden Kragen aufsitzt. Beim Verspannen des Verbindungselementes, wird ein Kraftfluss von dem Anbindungsabschnitt auf das Insert, über den umlaufenden Kragen auf die zweite Deckschicht erzeugt. Eine Gegenkraft wird mit der Spanneinrichtung aufgebracht. Der Kern ist üblicherweise aus einem nachgiebigen geschäumten Material ausgebildet, und damit ungeeignet zur Aufnahme von Vorspannkräften. Bei Beaufschlagung mit Vorspannkräften würde der Schaumkern Nachgeben und Schwindungserscheinungen zeigen, aufgrund welcher sich das Verbindungselement von dem Kunststoffbauteil lößt.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang mit beispielhaft beschriebenen Ausführungsformen der vorliegenden Erfindung erläutert werden. Der Fachmann wird diese Merkmale auch einzeln und in anderen Kombinationen betrachten, um weitere Ausführungsformen zu bilden, die an entsprechende Anwendungen der Erfindung angepasst sind, solange diese im Rahmen der Erfindung gemäß dem unabhängigen Anspruch liegen.

Es zeigt in schematischer Darstellung:

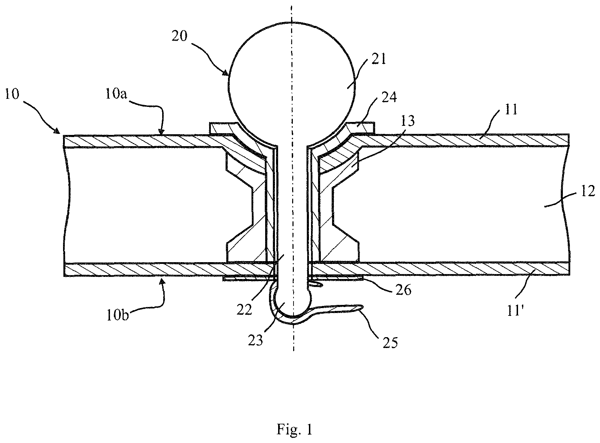

- Fig.1: den prinzipiellen Aufbau eines Kunststoffbauteils mit daran angeordnetem Verbindungselement.

Fig. 1 zeigt eine Schnittansicht durch ein Kunststoffbauteil 10 mit einem daran angeordneten Verbindungselement 20. Das Kunststoffbauteil 10 ist als Sandwich-Bauteil ausgebildet mit einer ersten Verstärkungsschicht 11, die in Fig. 1 als obere Verstärkungsschicht 11 abgebildet ist und einer zweiten Verstärkungsschicht 11', die in Fig. 1 als untere Verstärkungsschicht ausgebildet ist. Die Verstärkungsschichten 11, 11' sind aus einem faserverstärkten Kunststoff ausgebildet, bei dem in einem Matrixmaterial beispielsweise einem Epoxidharz, einer thermoplastischen oder duroplastischen Matrix Verstärkungsfasern eingebracht sind. Die obere Verstärkungsschicht 11 bildet eine erste Seite 10a des Verbundbauteils aus.

Die untere Verstärkungsschicht 11' bildet eine zweite Seite 10b des Verbundbauteils 10 aus. Zwischen den Verstärkungsschichten 11, 11' ist ein Kern 12 eingebracht. Der Kern 12 umgibt einen Einleger 13, der eine innere Bohrung beziehungsweise einen Durchbruch aufweist, durch die zumindest das Verbindungselement 20 hindurchgesteckt werden kann. Vorzugsweise wird bei der Herstellung des Verbundbauteils 20 der Einleger 13 bereits bei der Erzeugung des Kernes 12 integriert, indem der Einleger 13 mit dem kernbildenden Material umschäumt wird. Als Material eignet sich bspw. Polyurethan(PUR)-Schaum. Alternativ zu dem Schaumstoff kann der Kern 12 auch aus Holz ausgebildet sein.

Der Schaumkern kann eine Dichte im Bereich von 70kg/ m³ bis 250 kg/ m³ aufweisen. Zur Ausbildung des Schaumkerns eignen sich verschiedene Materialien, insbesondere Polyurethan-Schaum (PU-Schaum), PolyethylenSchaum (PET-Schaum), Polyvinylchlorid-Schaum (PVC-Schaum), Polymethacrylimid-Schaum (PMI-Schaum) oder Polyetherimid-Schaum (PEI-Schaum).

Das Verbindungselement 20 ist in Form eines Kugelbolzens ausgebildet. Es umfasst einen Anbindungsabschnitt 21 und einen Verankerungsabschnitt, wobei letzterer aus einem Schaft 22 und einer Spanneinrichtung ausgebildet wird. Die Spanneinrichtung ist in Fig. 1 als ein Spanner 25 ausgebildet, der an einem axialen Ende des Schaftes 22 vorgesehen ist, das dem axialen Ende des Schaftes 22, an dem der kugelförmigen Anbindungsabschnitt 21 angeordnet ist, gegenüber liegt. Mit dem Verankerungsabschnitt kann folglich das Verbindungselement 20 fest an dem Kunststoffbauteil 10 angeordnet werden. Wie aus Fig. 1 ersichtlich ist, ist der Durchbruch durch das Kunststoffbauteil 10 als kreisrunde Bohrung ausgeführt. Diese Bohrung weist einen größeren Durchmesser im Bereich der ersten Verstärkungsschicht 11 und im Bereich des Schaumkerns 12. Im Bereich der unteren Deckschicht 11' weist die Bohrung einen kleineren Durchmesser auf. Die untere Deckschicht 11' bildet beim Übergang vom oberen Bereich zum unteren Bereich einen Anschlag in Form eines in Umfangsrichtung umlaufenden Kragens aus. Ein Insert 24 ist in dem oberen Bereich des Durchbruchs eingebracht. Dieses Insert 24 ist in Fig. 1 als Buchse mit einem Bund ausgebildet. Der Bund ist im oberen Bereich der Buchse 24 in Fig. 1 dargestellt. Die Buchse 24 stützt sich folglich mit ihrem unteren Ende auf der unteren Deckschicht 11' ab. Bei der Montage des Verbindungselements 20 in dem Kunststoffbauteil 10 wird zunächst die Buchse 24 in den Durchbruch eingeführt. Danach wird das Verbindungselement 20 in eine in axialer Richtung der Buchse verlaufende Bohrung eingebracht. Anschließend wird mit der Spanneinrichtung eine Vorspannkraft erzeugt, so dass der Anbindungsabschnitt 21 über die Buchse 24 mit der unteren Deckschicht und der Spanneinrichtung vorgespannt wird. Hierzu wird die Spanneinrichtung 25 um eine kugelförmige Lagerung 23 gedreht. Diese Lagerung 23 ist an dem axialen Ende des Schafts 22 ausgebildet, das der Spanneinrichtung 25 zugewandt ist.

In Fig. 1 ist eine Unterlegscheibe 26 abgebildet, die jedoch rein optional ist. Durch die Vorspannkraft wird gewährleistet, dass das Verbindungselement 20 bzw. der Kugelbolzen sicher und spielfrei an dem Kunststoffbauteil 10 befestigt ist. Dabei wird keine Kraft auf das Kunststoffbauteil 10 übertragen. Dies würde dazu führen, dass die Deckschicht 11 und die Deckschicht 11' zueinander verquetscht werden, wobei der Kern 12 gepresst wird. Solche Effekte sind unerwünscht, da sie auf Dauer ein Kriechverhalten auslösen, wodurch das Kunststoffbauteil 10 Schaden nimmt.

Um einen sicheren, spielfreien Halt zu gewährleisten, sind die Länge des Verbindungselements 20, d.h. der Abstand zwischen dem Anbindungsbereich 21 und der Spanneinrichtung, mit der Länge des Insert 24 und mit der Dicke des Verbundbauteils 10 abgestimmt.

Wie weiterhin aus Fig. 1 ersichtlich ist, weist der Bund des Abstützelements 24 eine Krümmung auf, die der Krümmung des kugelförmigen Anbindungsabschnitts 21 angepasst ist. Eine entsprechende Krümmung ist auch in der Deckschicht 11 vorgesehen. Diese Krümmung bietet den Vorteil, dass beim Einbringen des Verbindungselementes 20 in die Buchse 24 bzw. das Insert 24 ein Toleranzausgleich möglich ist. Dies ist ein wesentlicher Vorteil gegenüber Ausführungsformen, in denen das Insert24 als eine handelsübliche Buchse ausgebildet ist, bei der der Bereich des Bundes einen rechtwinkligen Absatz zum Bereich der zylindrischen Hülse ausbildet. In einer weiteren Ausführungsform kann das Insert 24 als zylindrische Hülse ausgebildet sein, ohne Bund.

## Patentansprüche

1. Faserverstärktes Kunststoffbauteil (10), bei dem Verstärkungsfasern in einer Matrix angeordnet sind, mit einem Verbindungselement (20), wobei das Verbindungselement (20)
- einen Anbindungsabschnitt (21), der zumindest teilweise aus dem Kunststoffbauteil (10) herausragt, und
- einen Verankerungsabschnitt (23), mit dem das Verbindungselement (20) lösbar mit dem Kunststoffbauteil verbunden ist, aufweist,
wobei der Verankerungsabschnitt (23) einen kleineren Querschnittsumfang als der Anbindungsabschnitt (21) aufweist,
**dadurch gekennzeichnet, dass**
der Verankerungsabschnitt einen Schaft (22) und eine Spanneinrichtung umfasst, die als Spanner ausgebildet ist, welcher ein auf Basis eines Exzenters funktionierender Hebel ist, dessen Exzentrizität aus einer geöffneten Stellung, in der das Verbindungselement (20) spannungsfrei ist, in eine geschlossene Stellung, in der das Verbindungselement (20) verspannt ist, und umgekehrt, überführbar ist.

2. Kunststoffbauteil (10) nach Anspruch 1, **dadurch gekennzeichnet, dass**
der Anbindungsabschnitt (21) zumindest teilweise kugelförmig ausgebildet ist.

3. Kunststoffbauteil (10) nach einem der vorhergehenden Ansprüche,
**dadurch gekennzeichnet, dass**
der Anbindungsabschnitt (21) auf einer ersten Seite (10a) des Kunststoffbauteils (10) aus dem Kunststoffbauteil (10) herausragt und der Verankerungsabschnitt zumindest teilweise auf einer zweiten Seite (10b) des Kunststoffbauteils (10) herausragt, wobei die erste und die zweite Seite des Kunststoffbauteils (10) einander gegenüberliegen.

4. Kunststoffbauteil (10) nach einem der vorhergehenden Ansprüche, **dadurch gekennzeichnet, dass**
das Kunststoffbauteil (10) ein Sandwichbauteil ist, mit einem Kern (12) und mindestens einer Verstärkungslage (11).

5. Kunststoffbauteil (10) nach einem der vorhergehenden Ansprüche, **dadurch gekennzeichnet, dass**
ein Durchbruch vorgesehen ist, der durch das Kunststoffbauteil (10) von dessen ersten Seite (10a) zu dessen zweiten Seite (10b) verläuft, und in den zumindest der Verankerungsabschnitt des Verbindungselements (20) einbringbar ist.

6. Kunststoffbauteil (10) nach einem der vorhergehenden Ansprüche, **dadurch gekennzeichnet, dass**
in dem Durchbruch ein druckkraftresistentes Insert (24) vorgesehen ist, mit dem eine Vorspannkraft zwischen dem Anbindungsabschnitt (21) und der Spanneinrichtung übertragbar ist.

7. Kunststoffbauteil (10) nach einem der Ansprüche 1 bis 4, **dadurch gekennzeichnet, dass**
es ein Sandwichbauteil (10) ist, mit einem Kern (12)und einer ersten Deckschicht (11), welche die erste Seite (10a) ausbildet und einer zweiten Deckschicht (11'), welche die zweite Seite (10b) ausbildet, wobei ein Durchbruch vorgesehen ist, der durch das Kunststoffbauteil (10) von dessen ersten Seite (10a) zu dessen zweiten Seite (10b) verläuft, und in den zumindest der Verankerungsabschnitt des Verbindungselements (20) einbringbar ist und der Durchbruch als kreisrunde Bohrung ausgebildet ist, die im Bereich der ersten Deckschicht (11) und des Kerns (12) einen ersten Durchmesser aufweist und im Bereich der zweiten Deckschicht (11') einen zweiten Durchmesser aufweist, der kleiner als der erste Durchmesser ist, so dass die zweite Deckschicht (11') in axialer Richtung des Durchbruchs einen umlaufenden Kragen ausbildet, auf dem sich ein Insert (24) aufstützt.

8. Kunststoffbauteil (10) nach einem der Ansprüche 1 bis 4, **dadurch gekennzeichnet, dass**
es ein Sandwichbauteil (10) ist, mit einem Kern (12), einer ersten Deckschicht (11), welche die erste Seite (10a) ausbildet und einer zweiten Deckschicht (11'), welche die zweite Seite (10b) ausbildet und ein Durchbruch als kreisrunde Bohrung ausgebildet ist, die im Bereich der ersten Deckschicht (11) und des Kerns (12) einen ersten Durchmesser aufweist und im Bereich der zweiten Deckschicht (11') einen zweiten Durchmesser aufweist, der kleiner als der erste Durchmesser ist, so dass die zweite Deckschicht (11') in axialer Richtung des Durchbruchs einen umlaufenden Kragen ausbildet, wobei in dem Durchbruch ein druckkraftresistentes Insert (24) vorgesehen ist, mit dem eine Vorspannkraft zwischen dem Anbindungsabschnitt (21) und der Spanneinrichtung übertragbar ist auf dem sich das Insert (24) aufstützt.

## Claims

1. A fibre-reinforced plastics-material component (10), in which reinforcing fibres are arranged in a matrix, with a connecting element (20), wherein the connecting element (20) has
- an attachment portion (21) which protrudes at least partly out of the plastics-material component (10), and
- an anchoring portion (23) with which the connecting element (20) is connected detachably to the plastics-material component,
wherein the anchoring portion (23) has a smaller cross-sectional circumference than the attachment portion (21),
**characterised in that**
the anchoring portion comprises a shank (22) and a tensioning means, which is designed as a tensioner which is a lever which operates on the basis of an eccentric, the eccentricity of which can be converted from an opened position, in which the connecting element (20) is free from tension, into a closed position, in which the connecting element (20) is tensioned, and vice versa.

2. A plastics-material component (10) according to Claim 1, **characterised in that**
the attachment portion (21) is designed to be at least partly spherical.

3. A plastics-material component (10) according to one of the preceding claims, **characterised in that**
the attachment portion (21) on a first side (10a) of the plastics-material component (10) protrudes out of the plastics-material component (10) and the anchoring portion protrudes out at least partly on a second side (10b) of the plastics-material component (10), wherein the first and the second side of the plastics-material component (10) lie opposite one another.

4. A plastics-material component (10) according to one of the preceding claims, **characterised in that**
the plastics-material component (10) is a sandwich component, with a core (12) and at least one reinforcing layer (11).

5. A plastics-material component (10) according to one of the preceding claims, **characterised in that**
an aperture is provided which runs through the plastics-material component (10) from the first side (10a) thereof to the second side (10b) thereof, and into which at least the anchoring portion of the connecting element (20) can be introduced.

6. A plastics-material component (10) according to one of the preceding claims, **characterised in that**
an insert (24) which is resistant to compressive force is provided in the aperture, with which insert a pretensioning force can be transmitted between the attachment portion (21) and the tensioning means.

7. A plastics-material component (10) according to one of Claims 1 to 4, **characterised in that**
it is a sandwich component (10), with a core (12) and a first outer layer (11), which forms the first side (10a), and a second outer layer (11'), which forms the second side (10b), with an aperture being provided which runs through the plastics-material component (10) from the first side (10a) thereof to the second side (10b) thereof, and into which at least the anchoring portion of the connecting element (20) can be introduced, and the aperture is designed as a circular bore which in the region of the first outer layer (11) and of the core (12) has a first diameter and in the region of the second outer layer (11') has a second diameter which is less than the first diameter, so that the second outer layer (11') in the axial direction of the aperture forms a circumambient collar on which an insert (24) is supported.

8. A plastics-material component (10) according to one of Claims 1 to 4, **characterised in that**
it is a sandwich component (10), with a core (12), a first outer layer (11), which forms the first side (10a), and a second outer layer (11'), which forms the second side (10b), and an aperture is designed as a circular bore which in the region of the first outer layer (11) and of the core (12) has a first diameter and in the region of the second outer layer (11') has a second diameter which is less than the first diameter, so that the second outer layer (11') in the axial direction of the aperture forms a circumambient collar, with an insert (24) which is resistant to compressive force being provided in the aperture, with which insert a pretensioning force can be transmitted between the attachment portion (21) and the tensioning means, on which the insert (24) is supported.

## Revendications

1. Pièce en matériau synthétique renforcé par des fibres (10) dans laquelle des fibres de renfort sont disposés dans une matrice, comprenant un élément de liaison (20),
cet élément de liaison (20) comprenant :
un segment de connexion (21) qui dépasse au moins partiellement de la pièce en matériau synthétique (10), et
un segment d'ancrage (23) avec lequel l'élément de liaison (20) est relié de manière amovible avec la pièce en matériau synthétique,
le segment d'ancrage (23) ayant un contour de section inférieur à celui du segment de connexion (21),
**caractérisé en ce que**
le segment d'ancrage comporte une tige (22) et un dispositif de serrage qui est réalisé sous la forme d'un serre-écrou constitué par un levier fonctionnant sur le fondement d'un excentrique dont l'excentricité peut être transférée à partir d'une position ouverte dans laquelle l'élément de liaison (20) est exempt de tension dans une position fermée dans laquelle l'élément de liaison (20) est serré et inversement.

2. Pièce en matériau synthétique (10) conforme à la revendication 1, **caractérisée en ce que**
le segment de connexion (21) est réalisé au moins en partie en forme de sphère.

3. Pièce en matériau synthétique (10) conforme à l'une des revendications précédentes,
**caractérisée en ce que**
le segment de connexion (21) dépasse sur un premier côté (10a) de la pièce en matériau synthétique (10) et le segment d'ancrage dépasse au moins partiellement sur un second côté (10b) de cette pièce en matériau synthétique (10), le premier côté et le second côté de la pièce en matériau synthétique (10) étant opposés.

4. Pièce en matériau synthétique (10) conforme à l'une des revendications précédentes,
**caractérisée en ce qu'**
elle est constituée par une pièce en sandwich ayant un noyau (12) et au moins une couche de renfort (11).

5. Pièce en matériau synthétique (10) conforme à l'une des revendications précédentes,
**caractérisée en ce qu'**
il est prévu un perçage qui s'étend au travers de la pièce en matériau synthétique (10) de son premier côté (10a) à son second côté (10b) et dans lequel peut être introduit au moins le segment d'ancrage de l'élément de liaison (20).

6. Pièce en matériau synthétique (10) conforme à l'une des revendications précédentes,
**caractérisée en ce qu'**
il est prévu dans le perçage un insert (24) résistant à une force de pression par lequel une force de précontrainte peut être transférée entre le segment de connexion (21) et le dispositif de serrage.

7. Pièce en matériau synthétique (10) conforme à l'une des revendications 1 à 4,
**caractérisée en ce qu'**
elle est constituée par une pièce en sandwich (10) ayant un noyau (12) et une première couche de recouvrement (11) qui forme le premier côté (10a) et une seconde couche de recouvrement (11') qui forme le second côté, et
dans laquelle il est prévu un perçage qui s'étend au travers de celle-ci de son premier côté (10a) à son second côté (10b) et dans lequel peut être introduit au moins le segment d'ancrage de l'élément de liaison (20), le perçage étant réalisé sous la forme d'une ouverture circulaire qui a, dans la zone de la première couche de recouvrement (11) et du noyau (12), un premier diamètre et dans la zone de la seconde couche de recouvrement (11') un second diamètre qui est inférieur au premier diamètre de sorte que la seconde couche de recouvrement (11') forme, dans la direction axiale du perçage une collerette périphérique sur laquelle s'appuie un insert (24).

8. Pièce en matériau synthétique (10) conforme à l'une des revendications 1 à 4,
**caractérisée en ce qu'**
elle est constituée par une pièce en sandwich (10) ayant un noyau (12), une première couche de recouvrement (11) qui forme le premier côté (10a) et une seconde couche de recouvrement (11') qui forme le second côté (10b) et le perçage est réalisé sous la forme d'une ouverture circulaire qui a, dans la zone de la première couche de recouvrement (11) et du noyau (12) un premier diamètre et dans la zone de la seconde couche de recouvrement (11') un second diamètre qui est inférieur au premier diamètre de sorte que la seconde couche de recouvrement (11') forme dans la direction axiale du perçage une collerette périphérique, et il est prévu dans le perçage un insert résistant à une force de pression (24) permettant de transmettre une force de précontrainte entre le segment de connexion (21) et le dispositif de serrage sur lequel s'appuie l'insert (24).
